(19) **Europäisches Patentamt / European Patent Office / Office européen des brevets**

(11) **EP 3 894 510 B1**

(12) **FASCICULE DE BREVET EUROPEEN**

(45) Date de publication et mention
de la délivrance du brevet:
**15.10.2025 Bulletin 2025/42**

(21) Numéro de dépôt: **19831630.9**

(22) Date de dépôt: **13.12.2019**

(51) Classification Internationale des Brevets (IPC):
**C09K 11/02** (2006.01)  **C09K 11/08** (2006.01)
**E01F 9/00** (2016.01)  **C09D 5/33** (2006.01)
**C09D 5/22** (2006.01)

(52) Classification Coopérative des Brevets (CPC):
**C09K 11/02; C09D 5/22; C09K 11/08; E01F 9/524**

(86) Numéro de dépôt international:
**PCT/EP2019/085160**

(87) Numéro de publication internationale:
**WO 2020/120766 (18.06.2020 Gazette 2020/25)**

(54) **PROCEDE DE FABRICATION D'UNE COMPOSITION PHOTOLUMINESCENTE, COMPOSITION PHOTOLUMINESCENTE OBTENUE ET PROCEDE DE MAINTIEN DE LA LUMINANCE**

VERFAHREN ZUR HERSTELLUNG EINER PHOTOLUMINESZENTEN ZUSAMMENSETZUNG, ERHALTENE PHOTOLUMINESZENTE ZUSAMMENSETZUNG UND VERFAHREN ZUR ERHALTUNG DER LUMINANZ

METHOD FOR PRODUCING A PHOTOLUMINESCENT COMPOSITION, PHOTOLUMINESCENT COMPOSITION OBTAINED AND METHOD FOR MAINTAINING LUMINANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2018 FR 1872898**

(43) Date de publication de la demande:
**20.10.2021 Bulletin 2021/42**

(73) Titulaire: **Olikrom**
**33600 Pessac (FR)**

(72) Inventeur: **LETARD, Jean-François**
**33610 CANEJAN (FR)**

(74) Mandataire: **Aquinov**
**12, Cours Xavier Arnozan**
**33000 Bordeaux (FR)**

(56) Documents cités:
**EP-A1- 1 460 180**   **WO-A1-2016/027027**
**WO-A1-93/09189**   **FR-A1- 2 941 236**
**US-A1- 2003 080 341**

## Description

L'invention concerne un procédé de fabrication d'une composition photoluminescentes et la composition photoluminescente obtenue à partir de la mise en œuvre dudit procédé. L'invention vise également un procédé de maintien de la luminance d'une telle composition.

On connaît les revêtements photoluminescents, notamment destinés à être utilisés pour rendre les produits qui en sont revêtus émetteur de lumière après y avoir été exposés, ceci de façon naturelle, sans aucune source d'énergie.

Ce phénomène de photoluminescence est fort bien connu et de nombreux composés minéraux disposent de cette propriété d'absorption dans une longueur d'onde et restitution dans une autre longueur d'onde.

Les particules photoluminescentes sont à base d'une matrice inorganique et d'un ion dopant. Parmi les matrices inorganiques, nous avons, par exemple : $MAl_2O_4$ (M = Ca, Sr, Ba, Mg), $MSiO_3$ (M = Cd, Ca, Sr, Ba, Mg), MS (M = Ca, Zn), , $MSnO_4$ (M = Mg, Ca).

Parmi les ions de terres rares, nous avons par exemple : $Ln^{3+}$ : $Eu^{3+}$, $Eu^{2+}$, $Ce^{3+}$, $Tb^{3+}$, $Sm^{3+}$, $Pr^{3+}$, $Dy^{3+}$, $Er^{3+}$, $Tm^{3+}$, $Nd^{3+}$, ou les ions d'un métal de transition comme $V^{3+}$, $Cu^{2+}$, $Mn^{2+}$, $Ti^{4+}$, $Sn^{2+}$, $Co^{2+}$, $Bi^{3+}$, $Pb^{2+}$ pour ne citer que ceux-là.

Les applications sont nombreuses par exemple en signalisation horizontale et verticale. Plutôt que d'éclairer des routes des signaux d'informations et de consommer de l'énergie, il serait plus rationnel et écologique de disposer de marquages susceptibles d'être vus, même en l'absence d'éclairage.

Les utilisateurs pourraient ainsi être guidés de façon tout à fait adaptée. Par contre, non seulement il faut que la densité de photoluminescence soit suffisante, mais il faut aussi que l'effet perdure durant tout la durée de l'absence de lumière naturelle ou artificielle.

Le but de ces compositions est de générer un pouvoir photoluminescent aussi élevé que possible et aussi durable que possible.

Il faut alors que le rapport de composés photoluminescents, par rapport à la matrice qui les reçoit, soit amélioré.

Les compositions connues comprennent une matrice, généralement incolore, à laquelle est adjoint un ensemble de charges inorganiques qui ont pour but de rendre ladite composition opacifiante afin de masquer le support recevant ladite composition.

En effet, pour que l'effet photoluminescent soit élevé il faut augmenter la densité d'une part et masquer le support d'autre part.

Les charges nécessaires pour rendre la composition opacifiante présentent l'inconvénient de représenter un pourcentage jusqu'à 50% de la matrice.

Aussi le pourcentage en composés minéraux photoluminescents reste nécessairement faible.

L'usure mécanique peut aussi être un vrai problème car les compositions, une fois mises en place sur un support, par exemple une peinture routière, subissent une usure mécanique par le passage des véhicules, ce qui retire une partie de matière et donc diminue la densité de composés photoluminescents qui était déjà relativement faible du fait du taux élevé de charges.

Le document WO2016027027 décrit un procédé de fabrication d'un matériau photoluminescent comprenant la combinaison de deux substances présentant des tailles de particules bien définies. Toutefois, le procédé décrit ne permet pas d'obtenir une composition photoluminescente présentant une densité améliorée et donc une couvrance améliorée tout en évitant de masquer les composés photoluminescents.

L'invention a donc pour but de pallier les problèmes des compositions de l'art antérieur et de proposer un procédé de réalisation d'une composition comportant des composés photoluminescents à forte densité, donc générant une forte photoluminescence et une composition ayant une forte couvrance, avec un faible taux de charges inorganiques, ceci pendant une longue durée du fait de la possibilité de capter une forte énergie et de restituer cette énergie durant une longue période.

La présente invention vise aussi un procédé pour maintenir la luminance de cette composition au-dessus d'un seuil donné.

A cet effet, le procédé de réalisation d'une composition photoluminescente, notamment à partir de composés photoluminescents PH granulaires, choisis parmi les matrices inorganiques dopées par au moins un ion, ladite composition photoluminescente étant destinée à être introduite avec au moins une charge inorganique dans une matrice transparente, se caractérise en ce qu'il comprend une étape de réalisation qui consiste à :

- Choisir un premier composé photoluminescent PH1 avec une plage granulométrique comportant un pic centré sur une valeur P1 correspondant à un diamètre D1 de particules,
- Choisir au moins un deuxième composé photoluminescent PH2 avec une plage granulométrique comportant un pic centré sur une valeur P2 correspondant à un diamètre D2 de particules,
- Choisir le diamètre D2 égal à la mesure maximale M1 de l'espace volumique V1 laissé libre au centre de l'agencement en carré de quatre particules de diamètre D1 juxtaposées calculé par la formule

$$D2 = [2 * D1\sqrt{2} - (2 * D1)/2].$$

Plus particulièrement le procédé de réalisation d'une composition photoluminescente se caractérise en ce que l'on associe au moins une charge inorganique, la plage granulométrique de cette au moins une charge étant choisie avec un pic centré sur une valeur PC correspondant à un diamètre inférieur à celui de D2.

Selon l'invention, dans le procédé, les matrices des composés photoluminescents sont choisies parmi les familles suivantes : MAl2O4 (M=Ca, Sr, Ba, Mg), MSiO3 (M=Cd, Ca, Sr, Ba, Mg), MS (M=Ca, Zn), , MSnO4 (M=Mg, Ca) et les ions dopants parmi les ions de terres rares : Ln3+ : Eu3+, Eu2+, Ce3+, Tb3+, Sm3+, Pr3+, Dy3+, Er3+, Tm3+, Nd3+, ou parmi les ions d'un métal de transition comme V3+, Cu2+, Mn2+, Ti4+, Sn2+, Co2+, Bi3+, Pb2+.

Des charges opacifiantes sont choisies parmi l'oxyde de titane, l'oxyde de zinc, le sulfate de baryum, le carbonate de calcium, la zircone ou un mélange de celles-ci.

L'invention couvre aussi une composition photoluminescente obtenue par le procédé qui comprend :

-    un premier composé photoluminescent PH1 avec une plage granulométrique comportant un pic centré sur une valeur P1 correspondant à un diamètre D1 de particules,

-    au moins un deuxième composé photoluminescent PH2 avec une plage granulométrique comportant un pic centré sur une valeur P2 correspondant à un diamètre D2 de particules, le diamètre D2 étant égal à la mesure maximale M1 de l'espace volumique V1 laissé libre au centre de l'agencement en carré de quatre particules de diamètre D1 juxtaposées calculé par la formule

$$D2 = [2 * D1\sqrt{2} - (2 * D1)/2] \ .$$

-    les matrices des composés photoluminescents étant choisies parmi les familles suivantes : MAl2O4 (M=Ca, Sr, Ba, Mg), MSiO3 (M=Cd, Ca, Sr, Ba, Mg), MS (M=Ca, Zn), , MSnO4 (M=Mg, Ca) et les ions dopants parmi les ions de terres rares : Ln3+ : Eu3+, Eu2+, Ce3+, Tb3+, Sm3+, Pr3+, Dy3+, Er3+, Tm3+, Nd3+, ou parmi les ions d'un métal de transition comme V3+, Cu2+, Mn2+, Ti4+, Sn2+, Co2+, Bi3+, Pb2+, et

-    au moins une charge opacifiante.

Dans cette composition, les charges opacifiantes sont choisies parmi les oxydes de titane, oxyde de zinc, sulfate de baryum, carbonate de calcium, zircone ou un mélange de celles-ci.

L'invention vise aussi un revêtement photoluminescent, comprenant une telle composition mentionnée ci-dessus et noyée dans une résine transparente.

Cette résine transparente est choisie parmi les familles suivantes : polyuréthanes, acryliques, époxydes, alkydes.

L'invention couvre les applications photoluminescentes et notamment l'utilisation d'un revêtement pour la réalisation d'une peinture pour la signalisation routière ou pour la réalisation d'une encre pour l'impression sur papier, sur film polymère ou sur tissu.

L'invention porte aussi sur le mélange maître additif obtenu à partir d'une telle composition utilisable en injection ou en extrusion de matrices polymériques en vue de réaliser des produits photoluminescents.

La présente invention est maintenant décrite à l'aide d'exemples uniquement illustratifs et nullement limitatifs de la portée de l'invention, et à partir des illustrations jointes, dans lesquelles :

[Fig. 1] représente une vue d'une distribution granulométrique théorique du procédé selon la présente invention, en considérant une structure à 3 particules PH1, PH2 et PH3.

[Fig. 2A] représente un schéma illustrant la répartition géométrique théorique de matériaux photoluminescents selon l'art antérieur dans le cas de quatre (4) particules PH1, au sein d'une couche de revêtement avec ladite composition sur un support.

[Fig. 2B] représente un schéma illustrant la répartition géométrique théorique d'un module élémentaire, de matériaux photoluminescents selon le procédé de l'invention dans le cas de deux particules PH1et PH2, au sein d'une couche de revêtement avec ladite composition sur un support.

[Fig. 3] représente une comparaison de la luminescence à 10 minutes d'une composition selon la présente invention obtenue par le procédé selon la présente invention avec deux particules PH1 et PH2 à deux peintures commerciales à même taux de pigments et à même épaisseur sur deux fonds différents blanc et noir.

[Fig. 4] représente la comparaison de la luminescence à 10 minutes d'une composition selon la présente invention obtenue par le procédé selon la présente invention avec deux types de particules PH1 et PH2 à une encre commerciale à même taux de pigments et à même épaisseur.

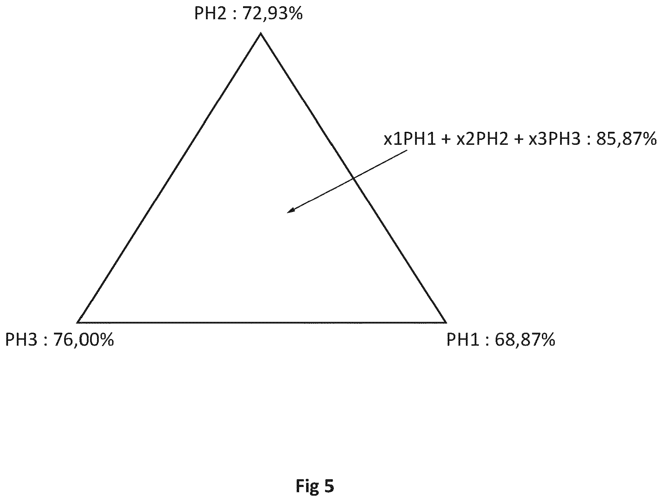

[Fig. 5] représente l'évolution du paramètre de couvrance d'un vernis photoluminescent comprenant trois types de particules PH1, PH2 et PH3, sous forme d'un diagramme ternaire.

[Fig. 6] représente le même diagramme ternaire avec des valeurs de luminance 10 minutes après excitation.

[Fig. 7] représente un diagramme théorique de maintien de luminance.

[Fig. 8] représente un exemple de maintien de la luminance d'une encre.

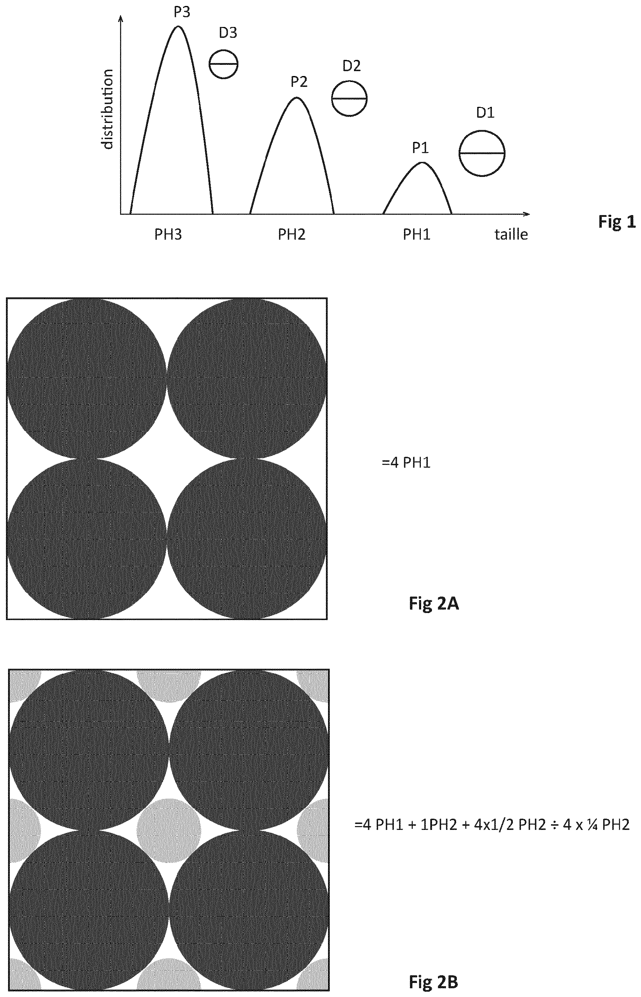

Le procédé selon la présente invention consiste à établir une distribution granulométrique comportant au moins deux plages granulométriques de composés photoluminescents PH1 et PH2 différentes. Sur la figure 1, un exemple de distribution est indiqué avec trois plages de composés photoluminescents PH1, PH2 et PH3.

Chaque plage de composés photoluminescents comporte un pic de granulométrie P1, P2 et P3, ces pics sont complémentaires.

Le pic P1 correspond à des particules d'un diamètre D1 et le pic P2 correspond à un diamètre D2 et le pic P3 correspond à un diamètre D3.

Le diamètre D2 est choisi pour correspondre sensiblement à la mesure maximale M1 de l'espace volumique V1 libéré par la présence d'au moins quatre particules PH1 de diamètre D1 juxtaposées.

L'exemple qui suit comporte quatre particules PH1 de diamètre D1 juxtaposées.

Sur la figure 2A, on constate que dans le cas d'un module théorique de quatre particules, des espaces libres sont libérés dans lesquels viennent se loger les charges dans les compositions de l'art antérieur, charges non représentées.

Selon le procédé de la présente invention, on choisit une combinaison de deux particules photoluminescentes PH1 et PH2, le diamètre D2 des particules de PH2 correspondant au diamètre laissé libre au centre par l'agencement en carré et en contact des quatre particules PH1 de diamètre D1 juxtaposées calculé par la formule

$$D2 = [2 * D1\sqrt{2} - (2 * D1)/2].$$

Sur la figure 2B, on a représenté un module théorique avec quatre particules PH1, 1 particule PH2, 4 moitiés de particules de PH2 et quatre quarts de particules PH2. Les notions de moitié et de quart sont théoriques en regard du module considéré.

Le remplissage volumique est donc, pour un module, de 4 particules photoluminescentes PH1 de 4 particules photoluminescentes PH2 de façon à conférer à l'ensemble la meilleure compacité thermodynamiquement stable.

Ceci augmente considérablement le volume de matière photoluminescente par unité de volume.

On entend par "complémentaire" le fait que les composés photoluminescents PH1 et PH2 sont choisis pour limiter les volumes libres inter-particulaires de l'un par l'autre et sont de la même famille.

De façon pratique, le procédé prévoit de passer au crible les composés photoluminescents broyés de façon à bénéficier de plages granulométriques précises, les plus étroites.

Selon le procédé, les composés photoluminescents sont choisis en diamètre et en pourcentage volumique du mélange pour assurer un remplissage optimal.

Les au moins deux composés photoluminescents sont mélangés et sont ensuite intégrés avec au moins une charge opacifiante dans au moins une matrice transparente pour élaborer une composition photoluminescente à revêtir.

Suivant la nature de cette matrice, le revêtement est considéré comme une peinture ou une encre.

On entend par peinture, en phase solvantée ou aqueuse, un produit liquide ou en poudre contenant des pigments, appliqué sur une surface, associé à des propriétés protectrices, décoratives ou techniques. La résine transparente pour une peinture dans laquelle est incorporée la composition obtenue par le procédé et au moins une charge opacifiante, est choisie, de façon non limitative, parmi les familles suivantes : polyuréthanes, acryliques, époxydes, alkydes.

On entend par encre, à polymérisation sous Ultraviolets, en phase solvant ou aqueuse, un produit liquide pour marquer un support papier ou textile, ou un film polymère par exemple. La résine transparente pour une encre dans laquelle est incorporée la composition obtenue par le procédé et au moins une charge opacifiante est choisie, par exemple et de façon non limitative, parmi les familles suivantes : époxy, acrylique, solvant naphta, nitro-cellulosique, alkydes, polyuréthanes, polyamides, cétoniques, polyesters.

La charge inorganique opacifiante est choisie, par exemple et de façon non limitative, parmi les familles suivantes ou un mélange de celles-ci : oxyde de titane, oxyde de zinc, sulfate de baryum, carbonate de calcium, zircone.

La résine transparente dans laquelle sont incorporées la composition obtenue par le procédé et la au moins une charge opacifiante est choisie, par exemple et de façon non limitative, parmi les familles suivantes : polyuréthanes, acryliques, époxydes, alkydes.

L'agencement géométrique est obtenu lors du mélangeage des particules des au moins deux composés PH1 et PH2 et de la au moins une charge associée aux particules de composés photoluminescents. Cette géométrie du fait de la distribution retenue et du pourcentage de chacun des composés photoluminescents choisis est unique puisque seule cette formation est thermodynamiquement stable, correspondant à une compacité maximale.

Les charges sont également choisies dans un profil granulométrique complémentaire des profils granulométriques des composés photoluminescents. Le choix du pic granulométrique est dicté pour que les charges viennent combler les vides inter-particulaires générés par les au moins deux composés photoluminescents utilisés. La charge comporte majoritairement des particules de diamètre inférieur à celui de la plus petite des particules photoluminescentes afin de ne pas interférer ou du moins de limiter les interférences.

On note que l'architecture des particules répond à un équilibre thermodynamique et dans le cas de particules d'un seul diamètre, les particules se positionnent en quinconce pour limiter les volumes de vide et offrir la meilleure compacité. Par contre lorsqu'il y a au moins deux types de particules l'équilibre thermodynamique conduit à une géométrie telle que dessinée à savoir des particules PH1 alignées perpendiculairement et des particules PH2 disposées dans les volumes laissés libres car c'est la meilleure compacité possible et l'architecture est ainsi stable. De plus, dans le cas de la présente invention, la granulométrie des PH2 a été choisie pour être adaptée au volume inter PH1 destiné à recueillir lesdites particules PH2. Ceci permet d'améliorer la densité et donc la couvrance tout en évitant de masquer les composés photoluminescents. Les phénomènes de ségrégation des particules PH1, PH2 ..... PHn d'une même famille sont impossibles lorsque les particules sont de même nature et de telles agrégations ne seraient pas stables. D'un côté les PH1, de l'autre les PH2 par exemple n'est pas thermodynamiquement possible.

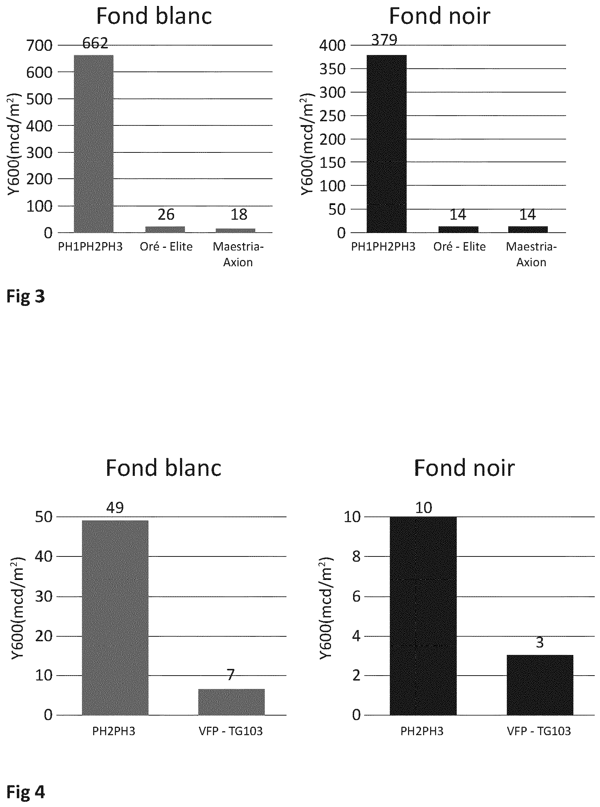

Ceci se traduit par des gains de photoluminescence très importants. Ainsi, la figure 3 montre sur le graphique de gauche les résultats obtenus sur fond blanc et sur le graphique de droite les résultats obtenus sur fond noir, avec une distribution de 3 types de particules PH1, PH2 et PH3 ayant des pics de diamètres à D1, D2 et D3 préparés selon le procédé de la présente invention, dans des proportions de P1, P2 et P3.

La comparaison est réalisée à partir de produits commercialisés sous les dénominations commerciales *Elite* des peintures de la société Oré Peinture et *Axion* des peintures de la société Maestria.

Ces résultats concernent la luminescence à 10 minutes ($Y_{600}$) après excitation (15 minutes sous lampe D65 X-Rite, 1500 lux) à même taux d'insertion de pigments photoluminescents dans les 3 essais, pour une épaisseur de $500\mu m$ sur fond blanc.

En effet, comme il n'existe aucune peinture photoluminescente, les tests comparatifs ont été réalisés avec des peintures routières du commerce à chacune desquelles, on a adjoint la même quantité de pigments photoluminescents mais sans choix de la distribution, en l'occurrence un pigment photoluminescent commercialisé sous la dénomination JPA-388 de la société FOSHAN JULIANG Photoluminescent Pigments.

Les valeurs de luminescence, exprimées en milli candela, à 10 minutes sur fond blanc, pour la composition selon la présente invention réalisée à partir du procédé introduit dans une matrice de résine transparente selon l'invention et donc de choix des distributions granulométriques PH1/PH2/PH3, sont de :

- 662 mCd/m² pour PH1/PH2/PH3

- 26 mCd/m² pour ELITE, et

- 18 mCd/m² pour AXION.

Les valeurs de luminescence, exprimées en milli candela, à 10 minutes ($Y_{600}$) après excitation (15 minutes sous lampe D65 X-Rite, 1500 lux) à même taux d'insertion de pigments photoluminescents dans les 3 essais, pour une épaisseur de $500\mu m$, sur fond noir.

Pour la composition selon la présente invention réalisée à partir du procédé selon l'invention et donc de choix des distributions granulométriques PH1/PH2/PH3, et les deux produits du commerce comparés, sont de :

- 379 mCd/m² pour PH1/PH2/PH3

- 14 mCd/m² pour ELITE, et

- 14 mCd/m² pour AXION.

De la même façon, des essais comparatifs sont conduits pour des encres en comparant une encre du commerce, par exemple une encre blanche référence TG103 de la société VFP Inks et une encre élaborée avec une composition de pigments photoluminescents selon le procédé de la présente invention.

Le taux d'insertion de pigments photoluminescents dans les 2 essais est identique.

Les valeurs de luminescence, exprimées en milli candela, à 10 minutes sur fond blanc, pour la composition selon la présente invention réalisée à partir du procédé selon l'invention et donc de choix des distributions granulométriques PH1PH2PH3 dans une matrice de résine transparente, et celles du produit comparé sont de :

- 49 mCd/m² pour PH1/PH2/PH3

- 7 mCd/m² pour TG103.

Les valeurs de luminescence, exprimées en milli candela, à 10 minutes sur fond noir, pour la composition selon la présente invention réalisée à partir du procédé selon l'invention et donc de choix des distributions granulométriques PH2PH3, et celles du produit comparé sont de :

- 10 mCd/m² pour PH2/PH3

- 3 mCd/m² pour TG103.

On a testé également l'effet synergique d'une composition selon la présente invention à partir d'un ternaire avec des particules photoluminescentes PH1, PH2 et PH3.

On constate que la couvrance varie et augmente lorsque l'on choisit une proportion de 1 x PH de plus gros diamètre, 2x PH2 de diamètre intermédiaire et 3 x PH3 de petit diamètre.

On entend par grand diamètre par exemple 100, ce qui conduit à un diamètre intermédiaire pour venir se loger dans les volumes libérés de :

[Math.1]

$$D2 = [(2xD1\sqrt2) - (2xD1)]/2$$

[Math.1]

$$D2 = [(2 \times 100\sqrt{2}) - (2 \times 100)]/2$$

[Math.1]

$$D2 = 40$$

De même pour les particules photoluminescentes de diamètre D3 qui viennent se loger dans les espaces libérés par les particules photoluminescentes de diamètres D1 et D2, dont le diamètre D3 est donc inférieur à celui de D2 qui lui-même était inférieur à D1.

Ainsi, la couvrance d'une composition établie selon le procédé de la présente invention conduit à avoir des particules de trois diamètres différents D1, D2 et D3 avec des pouvoirs de couvrance de :

- PH1 de couvrance 68,87% lorsqu'elles sont utilisées seules

- PH2 de couvrance 72,93% lorsqu'elles sont utilisées seules

- PH3 de couvrance 76% lorsqu'elles sont utilisées seules

De fait on constate qu'un mélange selon le procédé de la présente invention avec une proportion de 1 x PH de plus gros diamètre et de plus grande couvrance, 2x PH2 de diamètre intermédiaire et de couvrance inférieure et 3 x PH3 de petit diamètre et de couvrance encore inférieure, on obtient une couvrance de la composition selon l'invention de 85,87%, supérieure à celle d'une composition de particules avec une mono distribution, centrée sur un diamètre D1 ou D2 ou D3.

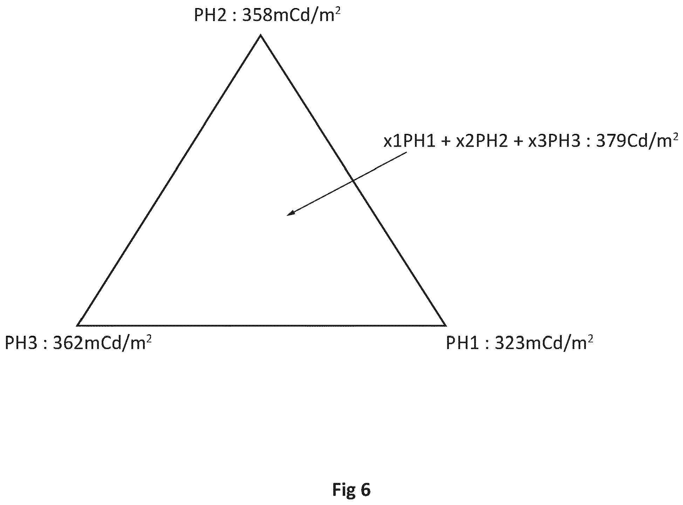

Les pourcentages sont exprimés en nombre de particules. On peut également constater sur le ternaire de la figure 6 que chacun des composés choisi PH1, PH2 et PH3 présente respectivement une valeur de luminance à 10 minutes après une excitation de 15 minutes sous lampe D65 X-Rite, 1500 lux, de 323 mCd/m$^2$, 358 mCd/m$^2$ et 362 mCd/m$^2$. On constate que le ternaire PH1PH2PH3, D1, D2 et D3 présente une luminance de 379 mCd/m$^2$, supérieure à la luminance de chacun d'entre eux.

Le mélange des particules photoluminescentes, des charges et de la au moins une résine transparente permet d'obtenir un mélange maître additif utilisable en injection ou en extrusion de matrices polymériques en vue de réaliser des produits photoluminescents.

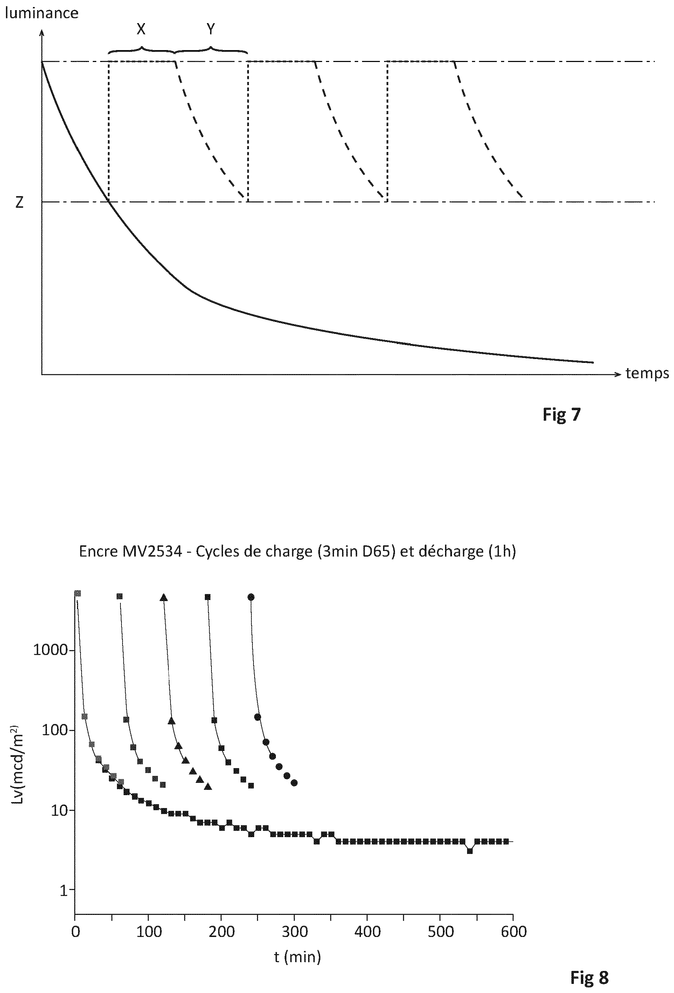

Selon le procédé de la présente invention, il est prévu un procédé de maintien de la luminance au-dessus d'un seuil Z donné. A cet effet le procédé consiste à exciter régulièrement la composition selon la présente invention une fois apposée sur un support, avant que la valeur de la luminance atteigne une valeur inférieure audit seuil Z, sur la figure 7, au bout d'une durée Y. Ainsi, lorsqu'une composition selon la présente invention est excitée durant la période X, le taux de luminance est au maximum en pointillés puis au cours du temps, la relaxation conduit à une perte de luminance et lorsque la luminance atteint une valeur Z de seuil, le procédé prévoit une ré-excitation de la composition jusqu'à la luminance maximale. Ainsi par excitations successives, il est possible de maintenir la luminance entre le seuil Z et la luminance maximale. Une indication des durées est par exemple une durée de ré-excitation de 3 min et une relaxation de 60 min.

Le graphe de la figure 8, concernant une encre à base de résine acrylique et une composition selon la présente invention, on obtient des valeurs réelles proches de la théorie, la luminance restant dans la plage de luminance fixée à environ 8 mCd/m$^2$. Ainsi, il est possible de maintenir éclairé un produit, une signalétique durant de longue période avec une excitation d'une durée très limitée de 3min en l'occurrence. L'excitation et les ré-excitations peuvent être obtenues pour les réalisations concrètes comme le marquage routier par tout moyen qui peut être un éclairage public, un éclairage spécifique à durée et/ou à intensité pilotée.

L'avantage d'une composition selon la présente invention est de rester efficace avec un seuil de luminance suffisant pendant des durées très importantes, y compris s'il y a du passage et que le revêtement sur le support s'érode. La composition selon l'invention permettant de conférer la même luminance dans la masse est aussi prête à accueillir une quantité d'énergie suffisante pendant la phase d'excitation, pour la restituer lors de la phase de relaxation. Il est entendu que ce qui est valable pour la composition dans son ensemble est valable pour le revêtement réalisé à partir de ladite composition.

**Revendications**

1. Procédé de réalisation d'une composition photoluminescente, notamment à partir de composés photoluminescents PH granulaires, choisis parmi les matrices inorganiques dopées par au moins un ion, ladite composition photoluminescente étant destinée à être introduite avec au moins une charge inorganique dans une matrice transparente, **caractérisé en ce qu'**il comprend une étape de réalisation de ladite composition qui consiste à :

   - Choisir un premier composé photoluminescent PH1 avec une plage granulométrique comportant un pic centré sur une valeur P1 correspondant à un diamètre D1 de particules,
   - Choisir au moins un deuxième composé photoluminescent PH2 avec une plage granulométrique comportant un pic centré sur une valeur P2 correspondant à un diamètre D2 de particules,

- Choisir le diamètre D2 égal à la mesure maximale M1 de l'espace volumique V1 laissé libre au centre de l'agencement en carré de quatre particules de diamètre D1 juxtaposées calculé par la formule

$$D2 = [2 * D1\sqrt{2} - (2 * D1)/2].$$

2. Procédé de réalisation d'une composition photoluminescente selon la revendication 1, **caractérisé en ce que** l'on associe au moins une charge, la plage granulométrique de cette au moins une charge inorganique étant choisie avec un pic centré sur une valeur PC correspondant à un diamètre D inférieur au plus petit diamètre D1, D2 du au moins un composé photoluminescent PH1, PH2.

3. procédé de réalisation d'une composition photoluminescente selon la revendication 1, ou 2, **caractérisé en ce que** les matrices des composés photoluminescents sont choisies parmi les familles suivantes : MAl2O4 (M=Ca, Sr, Ba, Mg), MSiO3 (M=Cd, Ca, Sr, Ba, Mg), MS (M=Ca, Zn), MSnO4 (M=Mg, Ca) et les ions dopants parmi les ions de terres rares : Ln3+ : Eu3+, Eu2+, Ce3+, Tb3+, Sm3+, Pr3+, Dy3+, Er3+, Tm3+, Nd3+, ou parmi les ions d'un métal de transition comme V3+, Cu2+, Mn2+, Ti4+, Sn2+, Co2+, Bi3+, Pb2+.

4. Procédé de réalisation d'une composition photoluminescente selon l'une quelconque des revendications précédentes, **caractérisé en ce que** la charge est une charge opacifiante et cette charge est choisie parmi les oxyde de titane, oxyde de zinc, sulfate de baryum, carbonate de calcium, zircone ou un mélange de celles-ci

5. Composition photoluminescente obtenue par le procédé selon l'une quelconque des revendications précédentes **caractérisé en ce qu'**elle comprend :

   - un premier composé photoluminescent PH1 avec une plage granulométrique comportant un pic centré sur une valeur P1 correspondant à un diamètre D1 de particules,
   - au moins un deuxième composé photoluminescent PH2 avec une plage granulométrique comportant un pic centré sur une valeur P2 correspondant à un diamètre D2 de particules, le diamètre D2 égal à la mesure maximale M1 de l'espace volumique V1 laissé libre au centre de l'agencement en carré de quatre particules de diamètre D1 juxtaposées calculé par la formule

$$D2 = [2*D1\sqrt{2} - (2*D1)/2].$$

   - les matrices des composés photoluminescents étant choisies parmi les familles suivantes : MAl2O4 (M=Ca, Sr, Ba, Mg), MSiO3 (M=Cd, Ca, Sr, Ba, Mg), MS (M=Ca, Zn), MSnO4 (M=Mg, Ca) et les ions dopants parmi les ions de terres rares : Ln3+ : Eu3+, Eu2+, Ce3+, Tb3+, Sm3+, Pr3+, Dy3+, Er3+, Tm3+, Nd3+, ou parmi les ions d'un métal de transition comme V3+, Cu2+, Mn2+, Ti4+, Sn2+, Co2+, Bi3+, Pb2+, et
   - au moins une charge opacifiante.

6. Composition photoluminescente selon la revendication 5, **caractérisé en ce que** les charges sont choisies parmi les oxyde de titane, oxyde de zinc, sulfate de baryum, carbonate de calcium, zircone ou un mélange de celles-ci.

7. Revêtement photoluminescent, **caractérisé en ce qu'**il comprend une composition selon l'une des revendications 5 ou 6, noyée dans une résine transparente.

8. Revêtement photoluminescent selon la revendication 7, **caractérisé en ce que** la résine transparente est choisie parmi les familles suivantes : polyuréthanes, acryliques, époxydes, alkydes.

9. Utilisation d'un revêtement selon la revendication 7 ou 8 pour la réalisation d'une peinture pour la signalisation routière.

10. Utilisation d'un revêtement selon la revendication 7 ou 8 pour la réalisation d'une encre pour l'impression sur papier, sur film polymère ou sur tissu.

11. Mélange maître additif obtenu à partir d'une composition selon la revendication 5 ou 6, utilisable en injection ou en extrusion de matrices polymériques en vue de réaliser des produits photoluminescents.

**Patentansprüche**

1. Verfahren zum Herstellen einer photolumineszierenden Zusammensetzung, insbesondere aus granularen photolumineszierenden PH Verbindungen, die aus anorganischen Matrizen ausgewählt sind, die mit mindestens einem Ion dotiert sind, wobei die photolumineszierende Zusammensetzung dazu bestimmt ist, mit mindestens einem anorganischen Füllstoff in eine transparente Matrix eingebracht zu werden, **dadurch gekennzeichnet, dass** es einen Schritt zum Herstellen der Zusammensetzung umfasst, der besteht aus:

   - Auswählen einer ersten photolumineszierenden Verbindung PH1 mit einem granulometrischen Bereich, der einen Peak aufweist, der auf einen Wert P1 zentriert ist, der einem Partikeldurchmesser D1 entspricht,

- Auswählen mindestens einer zweiten photolumineszierenden Verbindung PH2 mit einem granulometrischen Bereich, der einen Peak aufweist, der auf einen Wert P2 zentriert ist, der einem Partikeldurchmesser D2 entspricht,

- Auswählen des Durchmessers D2 gleich der maximalen Abmessung M1 des Volumenraums V1, der in dem Zentrum der quadratischen Anordnung von vier nebeneinanderliegenden Partikeln mit dem Durchmesser D1 frei bleibt, berechnet durch die Formel $D2 = [2*D1\sqrt{2} - (2*D1)/2]$.

2. Verfahren zum Herstellen einer photolumineszierenden Zusammensetzung nach Anspruch 1, **dadurch gekennzeichnet, dass** mindestens ein Füllstoff zugeordnet wird, wobei der granulometrische Bereich dieses mindestens einen anorganischen Füllstoffs mit einem Peak ausgewählt ist, der auf einen PC-Wert zentriert ist, der einem Durchmesser D entspricht, der kleiner als der kleinste Durchmesser D1, D2 der mindestens einen photolumineszierenden Verbindung PH1, PH2 ist.

3. Verfahren zum Herstellen einer photolumineszierenden Zusammensetzung nach Anspruch 1 oder 2, **dadurch gekennzeichnet, dass** die Matrizen der photolumineszierenden Verbindungen aus den folgenden Familien ausgewählt sind: MAl2O4 (M=Ca, Sr, Ba, Mg), MSiO3 (M=Cd, Ca, Sr, Ba, Mg), MS (M=Ca, Zn), MSnO4 (M=Mg, Ca) und Dotierionen aus den Seltenerdionen: Ln3+ : Eu3+, Eu2+, Ce3+, Tb3+, Sm3+, Pr3+, Dy3+, Er3+, Tm3+, Nd3+ oder aus den Ionen eines Übergangsmetalls wie V3+, Cu2+, Mn2+, Ti4+, Sn2+, Co2+, Bi3+, Pb2+.

4. Verfahren zum Herstellen einer photolumineszierenden Zusammensetzung nach einem der vorstehenden Ansprüche, **dadurch gekennzeichnet, dass** der Füllstoff ein trübender Füllstoff ist und dieser Füllstoff aus Titanoxid, Zinkoxid, Bariumsulfat, Calciumcarbonat, Zirkonoxid oder einer Mischung von diesen ausgewählt ist.

5. Photolumineszierende Zusammensetzung, die durch das Verfahren nach einem der vorstehenden Ansprüche erhalten wird, **dadurch gekennzeichnet, dass** sie umfasst:

   - eine erste photolumineszierende Verbindung PH1 mit einem granulometrischen Bereich, der einen Peak aufweist, der auf einen Wert P1 zentriert ist, der einem Partikeldurchmesser D1 entspricht,

- mindestens eine zweite photolumineszierende Verbindung PH2 mit einem granulometrischen Bereich, der einen Peak aufweist, der auf einen Wert P2 zentriert ist, der einem Partikeldurchmesser D2 entspricht, wobei der Durchmesser D2 gleich der maximalen Abmessung M1 des Volumenraums V1 ist, der in dem Zentrum der quadratischen Anordnung von vier nebeneinanderliegenden Partikeln mit dem Durchmesser D1 frei bleibt, berechnet durch die Formel $D2 = [2*D1\sqrt{2}-(2*D1)/2]$.

- wobei die Matrizen der photolumineszierenden Verbindungen aus den folgenden Familien ausgewählt sind: MAl2O4 (M=Ca, Sr, Ba, Mg), MSiO3 (M=Cd, Ca, Sr, Ba, Mg), MS (M=Ca, Zn), MSnO4 (M=Mg, Ca) und Dotierionen aus den Seltenerdionen: Ln3+ : Eu3+, Eu2+, Ce3+, Tb3+, Sm3+, Pr3+, Dy3+, Er3+, Tm3+, Nd3+ oder aus den Ionen eines Übergangsmetalls wie V3+, Cu2+, Mn2+, Ti4+, Sn2+, Co2+, Bi3+, Pb2+, und

- mindestens einen trübenden Füllstoff.

6. Photolumineszierende Zusammensetzung nach Anspruch 5, **dadurch gekennzeichnet, dass** die Füllstoffe aus Titanoxid, Zinkoxid, Bariumsulfat, Calciumcarbonat, Zirkonoxid oder einer Mischung von diesen ausgewählt sind.

7. Photolumineszierende Beschichtung, **dadurch gekennzeichnet, dass** sie eine Zusammensetzung nach einem der Ansprüche 5 oder 6 umfasst, die in ein transparentes Harz eingebettet ist.

8. Photolumineszierende Beschichtung nach Anspruch 7, **dadurch gekennzeichnet, dass** das transparente Harz aus den folgenden Familien ausgewählt ist: Polyurethane, Acryle, Epoxide, Alkyde.

9. Verwendung einer Beschichtung nach Anspruch 7 oder 8 zum Herstellen einer Farbe für die Straßenbeschilderung.

10. Verwendung einer Beschichtung nach Anspruch 7 oder 8 zum Herstellen einer Tinte für den Aufdruck auf Papier, auf Polymerfolie oder auf Gewebe.

11. Additivmuttermischung, die aus einer Zusammensetzung nach Anspruch 5 oder 6, erhalten wird, die bei einem Spritzen oder Extrudieren von Polymermatrizen im Hinblick auf das Herstellen photolumineszierender Produkte verwendbar ist.

## Claims

1. Method for producing a photoluminescent composition, in particular from granular PH photoluminescent compounds selected from inorganic matrices doped with at least one ion, said photoluminescent composition being intended to be introduced with at least one inorganic filler into a transparent matrix, **characterized in that** it comprises a step for producing said composition which consists in:

   - Selecting a first photoluminescent compound PH1 with a particle size range comprising a peak centered on a value P1 corresponding to a particle diameter D1,
   - Selecting at least one second photoluminescent compound PH2 with a particle size range comprising a peak centered on a value P2 corresponding to a particle diameter D2,
   - Selecting the diameter D2 equal to the maximum measurement M1 of the volumetric space V1 left free at the center of the square arrangement of four juxtaposed particles of diameter D1 calculated by the formula $D2 = [2*D1\sqrt{2}-(2*D1)/2]$.

2. Method for producing a photoluminescent composition according to claim 1, **characterized in that** at least one filler is associated therewith, the particle size range of this at least one inorganic filler being selected with a peak centered on a value PC corresponding to a diameter D smaller than the smallest diameter D1, D2 of the at least one photoluminescent compound PH1, PH2.

3. Method for producing a photoluminescent composition according to claim 1 or 2, **characterized in that** the matrices of photoluminescent compounds are selected from the following families: MAl2O4 (M=Ca, Sr, Ba, Mg), MSiO3 (M=Cd, Ca, Sr, Ba, Mg), MS (M=Ca, Zn), MSnO4 (M=Mg, Ca) and the dopant ions from among the rare earth ions: Ln3+: Eu3+, Eu2+, Ce3+, Tb3+, Sm3+, Pr3+, Dy3+, Er3+, Tm3+, Nd3+, or from the ions of a transition metal such as V3+, Cu2+, Mn2+, Ti4+, Sn2+, Co2+, Bi3+, Pb2+.

4. Method for producing a photoluminescent composition according to any one of the preceding claims, **characterized in that** the filler is an opacifying filler and this filler is selected from titanium oxide, zinc oxide, barium sulfate, calcium carbonate, zirconia or a mixture thereof

5. Photoluminescent composition obtained by the method according to any one of the preceding claims, **characterized in that** it comprises:

   - a first photoluminescent compound PH1 with a particle size range comprising a peak centered on a value P1 corresponding to a particle diameter D1,
   - at least one second photoluminescent compound PH2 with a particle size range comprising a peak centered on a value P2 corresponding to a particle diameter D2, the diameter D2 equal to the maximum measurement M1 of the volumetric space V1 left free at the center of the square arrangement of four juxtaposed particles of diameter D1 calculated by the formula D2= $[2*D1\sqrt{2}-(2*D1)/2]$.
   - the matrices of photoluminescent compounds being selected from the following families: MAl2O4 (M=Ca, Sr, Ba, Mg), MSiO3 (M=Cd, Ca, Sr, Ba, Mg), MS (M=Ca, Zn), MSnO4 (M=Mg, Ca) and the dopant ions from among the rare earth ions: Ln3+: Eu3+, Eu2+, Ce3+, Tb3+, Sm3+, Pr3+, Dy3+, Er3+, Tm3+, Nd3+, or from the ions of a transition metal such as V3+, Cu2+, Mn2+, Ti4+, Sn2+, Co2+, Bi3+, Pb2+, and
   - at least one opacifying filler.

6. Photoluminescent composition according to claim 5, **characterized in that** the fillers are selected from titanium oxide, zinc oxide, barium sulfate, calcium carbonate, zirconia or a mixture thereof.

7. Photoluminescent coating, **characterized in that** it comprises a composition according to one of claims 5 or 6, embedded in a transparent resin.

8. Photoluminescent coating according to claim 7, **characterized in that** the transparent resin is selected from the following families: polyurethanes, acrylics, epoxies, alkyds.

9. Use of a coating according to claim 7 or 8 for producing a paint for road signs.

10. Use of a coating according to claim 7 or 8 for producing an ink for printing on paper, polymer film or fabric.

11. Additive masterbatch obtained from a composition according to claim 5 or 6, for use in the injection or extrusion of polymeric matrices in order to produce photoluminescent products.

**Fig 1**

=4 PH1

**Fig 2A**

=4 PH1 + 1PH2 + 4x1/2 PH2 ÷ 4 x ¼ PH2

**Fig 2B**

## Fond blanc

## Fond noir

**Fig 3**

## Fond blanc

## Fond noir

**Fig 4**

PH2 : 72,93%

x1PH1 + x2PH2 + x3PH3 : 85,87%

PH3 : 76,00%                                     PH1 : 68,87%

**Fig 5**

$$PH2 : 358mCd/m^2$$

$$x1PH1 + x2PH2 + x3PH3 : 379Cd/m^2$$

$$PH3 : 362mCd/m^2 \qquad PH1 : 323mCd/m^2$$

Fig 6

**Fig 7**

Encre MV2534 - Cycles de charge (3min D65) et décharge (1h)

**Fig 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016027027 A